# EUROPÄISCHE PATENTSCHRIFT

(11) **EP 2 193 044 B1**
(45) Veröffentlichungstag und Bekanntmachung des Hinweises auf die Patenterteilung: **05.08.2015**
(21) Anmeldenummer: 08802296.7
(22) Anmeldetag: 17.09.2008
(51) Int. Cl.: B60N 2/30

(54) **KRAFTFAHRZEUG MIT EINEM LADEBODEN UND EINER RÜCKENLEHNE**
MOTOR VEHICLE WITH A LOADING FLOOR AND A BACKREST
VÉHICULE AUTOMOBILE COMPRENANT UN PLANCHER DE CHARGEMENT ET UN DOSSIER

(30) Priorität: 17.09.2007 DE 102007044281; 09.01.2008 DE 102008003563; 07.02.2008 DE 102008008330; 29.02.2008 DE 102008011968; 17.06.2008 DE 102008028407
(43) Veröffentlichungstag der Anmeldung: 09.06.2010
(73) Patentinhaber: Johnson Controls GmbH, 51399 Burscheid (DE)
(72) Erfinder: KARACSONYI, Tamas, 42289 Wuppertal (DE); KLUKOWSKI, Oliver, 50823 Köln (DE); PELLENZ, Wolfgang, 53340 Meckenheim (DE); NDAGIJIMANA, Robin, 41469 Neuss (DE)
(74) Vertreter: Wolff, Felix
(86) Internationale Anmeldenummer: PCT/EP2008/007771
(87) Internationale Veröffentlichungsnummer: WO 2009/036965

(56) Entgegenhaltungen:
- DE-A1- 10 204 123
- DE-A1-102004 009 699
- US-B1- 6 698 829

## Beschreibung

Die Erfindung betrifft Kraftfahrzeug mit einem verschieblichen Ladeboden und einer Rückenlehne, insbesondere der Rückenlehne einer Rücksitzbank.

Kraftfahrzeuge mit verschieblichen Ladeböden sind beispielsweise aus der DE 102 04 123 A1 bekannt. Der dort beschriebene Ladeboden ist als "Schleppboden" ausgeführt und mit einer Rückenlehne verbunden, die ihrerseits mittels zwei Gleitschuhen verschieblich an der Fahrzeugkarosserie gelagert ist. Eine Lageänderung der Rückenlene bewirkt eine Lageänderung des Schleppbodens. Aus der DE 199 58 676 C1 ist eine verschiebbare Rückenlehne bekannt, die mit einem Rollo verbunden ist, das sich ein- und auszieht abhängig von der Bewegung der Rückenlehne. Die aus dem Stand der Technik bekannten Anordnungen sind jedoch vergleichsweise aufwendig, wenig bedienerfreundlich, erlauben nur eine eingeschränkte Bewegung der Rückenlehne und/oder schränken den Komfort der Fahrzeuginsassen ein.

Es war deshalb die Aufgabe der vorliegenden Erfindung ein Kraftfahrzeug zur Verfügung zu stellen, das die Nachteile des Standes der Technik nicht aufweist. Insbesondere war es die Aufgabe der vorliegenden Erfindung ein Kraftfahrzeug zur Verfügung zu stellen, das einen hohen Komfort bei der Bedienung zur Vergrößerung des Fahrzeugladeraums aufweist und insbesondere eine Einhandbedienung bzw. die Vergrößerung bzw. Verkleinerung des Fahrzeugladeraums mit lediglich einem Bedienungsschritt zulässt.

Gelöst wird die Aufgabe mit einem Kraftfahrzeug mit einem verschieblichen Ladeboden und einer Rückenlehne, wobei die Rückenlehne zumindest zeitweise an dem Ladeboden gelagert ist.

Das erfindungsgemäße Kraftfahrzeug ist einfach und kostengünstig herzustellen. Durch Verschieben des Ladebodens wird die damit verbundene Rückenlehne mitverschoben. Dadurch kann beispielsweise vom Kofferraum aus in einem Zug die Größe der Ladefläche verändert werden. Der Komfort des Insassen wird nicht durch aufwendige Lagerungen und/oder Führungen der Rückenlehne eingeschränkt. Erfindungsgemäß weist das Fahrzeug einen Fahrzeugsitz mit einer Rückenlehne auf. Vorzugsweise handelt es sich bei dem Fahrzeugsitz um eine Rückbank, die hinter dem Fahrer- und/oder Beifahrersitz angeordnet ist. Besonders bevorzugt grenzt der Fahrzeugsitz unmittelbar an die Ladefläche im hinteren Bereich des Fahrzeuges an. Die Rückenlehne bildet dabei vorzugsweise eine Begrenzung der Ladefläche des Fahrzeuges. Vorzugsweise ist die Rückenlehne in mindestens zwei Rückenlehnensegmente vertikal unterteilt. Mögliche Teilungsverhältnisse sind beispielsweise 50:50, 60:40 oder 70:30. Die Rückenlehne kann Mittel aufweisen, um ihren Neigungswinkel, vorzugsweise segmentweise zu verstellen. Die Rückenlehne ist, vorzugsweise segmentwiese, von einer Gebrauchsposition, in der sie sich an der hinteren Kante des dazu gehörigen Sitzteils befindet und mindestens einem Fahrzeuginsassen Platz bietet, in eine Verstauposition längs in Richtung der davor befindlichen Sitzreihe, vorzugsweise bis zur Rückenlehne dieser Sitzreihe, verschiebbar. Vorzugsweise ist die Rückenlehne oder das jeweilige Rückenlehnensegment in mindestens einer, vorzugsweise beiden Stellungen verriegelbar, so dass sie die jeweilige Position nicht ungewollt verlassen kann. Die Rückenlehne oder das jeweilige Rückenlehnensegment kann in der Gebrauchs- und/oder in der Verstauposition zusätzliche Halterungen und/oder eine Verriegelung an der Karosserie aufweisen. Besonders bevorzugt erfolgt die Halterung/Verriegelung im oberen und/oder im unteren Bereich der Rückenlehne oder des jeweiligen Rückenlehnensegmentes.

Die Rückenlehne oder ein Rückenlehnensegment sind erfindungsgemäß an einem Ladeboden, der sich im Laderaum des Kraftfahrzeuges befindet, zumindest zeitweise gelagert. Zumindest zeitweise gelagert im Sinne der Erfindung bedeutet, dass der Lagerboden zumindest zeitweise, insbesondere während der Verschiebung von der Gebrauchs- in die Verstauposition alle statischen und dynamischen Kräfte, die auf die Rückenlehne oder das Rückenlehnensegment einwirken aufnimmt. Vorzugsweise führt der Ladeboden oder das Ladebodensegment die Rückenlehne bei deren Längsverschiebung. Lediglich in der Gebrauchs- und/oder Verstauposition kann die Rückenlehne oder das Rückenlehnensegment zusätzlich an der Karosserie des Fahrzeuges gelagert und/oder verriegelt werden. Der Ladeboden ist ein Boden, der sich oberhalb der Karosserie befindet und zumindest im Wesentlichen horizontal angeordnet ist. Dieser Ladeboden ist erfindungsgemäß verschieblich, insbesondere längsverschieblich, d.h. in und gegen die Fahrrichtung des Fahrzeugs beweglich, gelagert. Vorzugsweise weist der Ladeboden mindestens zwei Ladebodensegmente auf, wobei sich ein erstes Segment über die gesamte Breite des Ladebodens erstreckt und ein weiteres zweites Segment sich nur über einen Teilbereich der Breite erstreckt. Besonders bevorzugt entspricht die Breite dieses zweiten Ladebodensegmentes im Wesentlichen der Breite des davor liegenden Rückenlehnensegments, insbesondere des kleineren Rückenlehnensegmentes. Vorzugsweise bilden die beiden Segment eine im wesentlichen plane Ladefläche aus. In dem Fall, dass der Ladeboden zweisegmentig gestaltet ist und die Rückenlehne geteilt ist, ist vorzugweise das eine Rückenlehnensegment an dem einen und das andere Rückenlehnensegment an dem anderen Ladebodensegment gelagert. Die Ladebodensegmente und damit die Rückenlehnensegmente sind vorzugsweise getrennt voneinander oder gemeinsam miteinander verschiebbar. Vorzugsweise liegt der Ladeboden oder das jeweilige Ladebodensegment in der Verstaustellung nicht auf dem Sitzteil der in Fahrtrichtung davor liegenden Fahrzeugsitze auf.

Vorzugsweise ist der Ladeboden oder das jeweilige Ladebodensegment in einer Führung gelagert. Vorzugsweise handelt es sich bei der Führung um Führungsschienen, die rechts und links von dem Ladeboden bzw. dem jeweiligen Ladebodensegment sowie parallel zur Fahrtrichtung des Fahrzeugs angeordnet sind. Das Ladebodensegment, das sich nur über eine Teilbreite der Karosserie erstreckt, ist vorzugsweise an dem Ladeboden, der sich über die gesamte Breite der Karosserie erstreckt, gelagert. Jedes Ladebodensegment weist vorzugsweise seine eigene Führung auf, damit die Ladebodensegmente zumindest teilweise unabhängig voneinander aber auch gemeinsam verschoben werden können. Die Führung erlaubt den Ladeboden oder das jeweilige Ladebodensegment in jede beliebige Stellung zwischen der Gebrauchsposition und der Rückenlehne der davor befindlichen Sitzreihe zu verschieben und gegebenenfalls dort zu verriegeln.

In einer anderen bevorzugten Ausführungsform ist ein erstes Ladebodensegment, das sich insbesondere über die gesamte Breite der Karosserie erstreckt, an der Karosserie längsverschieblich gelagert. Das zweite Ladebodensegment ist relativ zu dem ersten Ladebodensegment an disem verschieblich gelagert. So können entweder beide Ladenbodensegmente gemeinsam oder ein Ladebodensegment alleine verschoben werden.

Vorzugsweise ist die Rückenlehne oder das Rückenlehnensegment besonders bevorzugt starr mit der Vorderkante des Ladebodens oder des Ladebodensegments verbunden.

Vorzugsweise wird ein Ladebodensegment einzeln und unabhängig von dem anderen verschoben.

Vorzugsweise wird der Ladeboden oder das jeweilige Ladebodensegment beim Verschieben geführt und dadurch auch die Rückenlehne oder das Rückenlehnensegment geführt.

Vorzugsweise hält der Ladeboden oder das Ladebodensegment die Rückenlehne oder das jeweilige Rückenlehnensegment, insbesondere während der Überführung von der Gebrauchs- in die Verstaustellung und ganz besonders bevorzugt in der Verstaustellung.

Eine bevorzugte Ausführungsform ist ein Kraftfahrzeug mit einem Fahrzeugsitz, wobei der Fahrzeugsitz ein Sitzteil und ein Lehnenteil aufweist, wobei das Lehnenteil zusammen mit einem Ladebodenelement im wesentlichen linear verschiebbar zwischen einer ersten einer Gebrauchsposition entsprechenden Position und einer zweiten einer Ladeposition entsprechenden Position vorgesehen ist. Vorzugsweise ist zwischen der ersten Position und der zweiten Position des Lehnenteils eine Schwenkbewegung des Sitzteils vorgesehen, wobei die Schwenkbewegung das Sitzteil insbesondere aufstellt, d.h. den Winkel des Sitzteils gegenüber der Horizontalen vergrößert.

Hierdurch wird eine Bedienung des erfindungsgemäßen Fahrzeugsitzes mit nur einer Bedienbewegung bzw. mit nur einem Bedienschritt möglich. Vorzugsweise ist es möglich, dass die Rückenlehne bzw. das Lehnenteil bei einem als Rücksitzbank vorgesehenen Fahrzeugsitz geteilt vorgesehen ist, beispielsweise gemäß einer Teilung ein Drittel zu zwei Drittel oder auch gemäß einer Teilung 40% zu 60% bzw. 30% zu 70%. Bei einer erfindungsgemäßen Einstellung der zweiten Position des Lehnenteils wird das Lehnenteil zur Vergrößerung des Ladeboden bzw. des Laderaumvolumens vorzugsweise nach vorne, besonders bevorzugt hinter die Lehnen einer weiter vorne angeordneten Sitzreihe des Fahrzeugs verschoben. Dies kann beispielsweise mittels Linearauszügen vorgesehen sein. Vorzugsweise kann es bevorzugt vorgesehen sein, dass eine Mehrzahl von Linearauszügen - beispielsweise drei Paare von Linearauszügen - derart angeordnet werden, dass die Möglichkeit besteht, bei einer geteilten Rückenlehne jedes der beiden Teile der Rückenlehne getrennt vom anderen Teil nach vorne in seine jeweilige Ladeposition zu bewegen oder auch beide Teile der Rückenlehne gemeinsam in die Ladeposition zu bewegen. Vorzugsweise ist es ferner auch möglich, dass jedes der beiden Teile der Rückenlehne individuell lediglich bis zu einem bestimmten Grad in Richtung zur Ladeposition bewegt wird. Hierdurch kann die Laderaumgröße besonders benutzerindividuell bzw. an den jeweiligen Transportzweck bzw. den jeweiligen Komfortanspruch innerhalb des Fahrgastraums angepasst eingestellt werden.

Im Folgenden werden die Erfindungen anhand der Figuren 1 - 8 erläutert. Diese Erläuterungen sind lediglich beispielhaft und schränken den allgemeinen Erfindungsgedanken nicht ein.
Figur 1 zeigt das erfindungsgemäße Fahrzeug mit dem Ladeboden und der Rückenlehne in Gebrauchsposition.
Figur 2 zeigt das Fahrzeug gemäß Figur 1, wobei ein Ladebodensegment und ein Rückenlehnensegment in die Verstaustellung überführt worden ist.
Figur 3 zeigt das Fahrzeug gemäß Figur 1, wobei beide Ladebodensegmente und beide Rückenlehnensegmente in die Verstaustellung überführt worden sind.
Figur 4 zeigt eine schematische Seitenansicht des Fahrzeugsitzes des erfindungsgemäßenFahrzeuges.
Figur 5 zeigt schematisch vier Draufsichten auf einen als Rücksitzbank ausgeführten Fahrzeugsitz des erfindungsgemäßen Fahrzeuges.
Figuren 6, 7 und 8 zeigen schematisch Details zur Funktionsweise bzw. zur Kinematik des Fahrzeugsitzes des erfindungsgemäßen Fahrzeuges.

Die Figuren zeigen den Blick in den Innenraum eines Kraftfahrzeugs mit einer Fahrzeugtür 1, einer Rücksitzbank 2 und einem Ladeboden 3. Die Rückenlehne ist vertikal in ein linkes und ein rechtes Rückenlehnensegment geteilt. Von der Rücksitzbank 2 sind nur das Sitzteil 4 und das linke Rückenlehnensegment 5 der Rückenlehne 6 abgebildet. Das rechte Rückenlehnensegment ist aus Übersichtsgründen ausgeblendet. Die Rückbank 2 befindet sich direkt vor dem Laderaum, hier dem Kofferraum, des erfindungsgemäßen Kraftfahrzeuges und begrenzt diesen in Fahrtrichtung. Vor der Sitzbank 2 befindet sich vorzugsweise eine weitere Sitzreihe, beispielsweise der Fahrer- und Beifahrersitz. In dem Laderaum ist oberhalb der Fahrzeugkarosserie ein im wesentlichen horizontal ausgerichteter Ladeboden 3 angeordnet, der sich über die gesamte Breite der Karosserie erstreckt und entlang nicht dargestellter Führungen, die sich vorzugsweise im rechten und linken Bereich des Ladebodens befinden, in und entgegen der Fahrrichtung verschiebbar ist. Hinter dem Lehnensegment 5 weist der Ladeboden ein Ladebodensegment 7 auf. Dieses Ladebodensegment weist eine geringer Höhe als der Ladeboden 3 auf und ist an diesem in und gegen die Fahrtrichtung verschieblich gelagert.

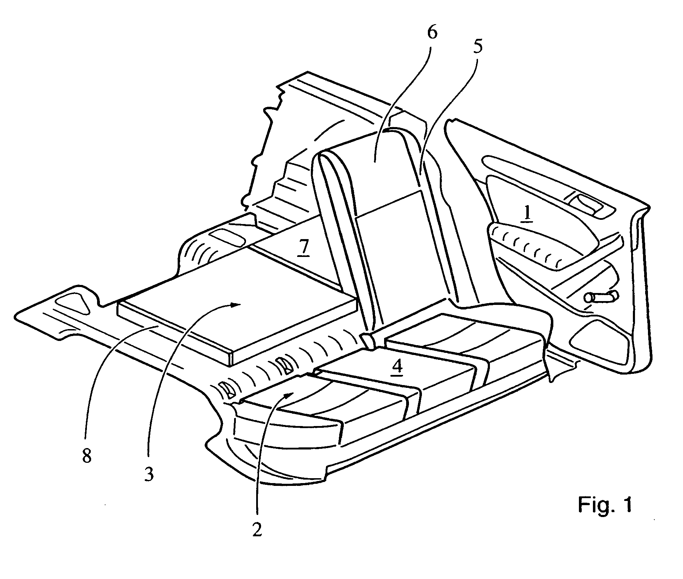

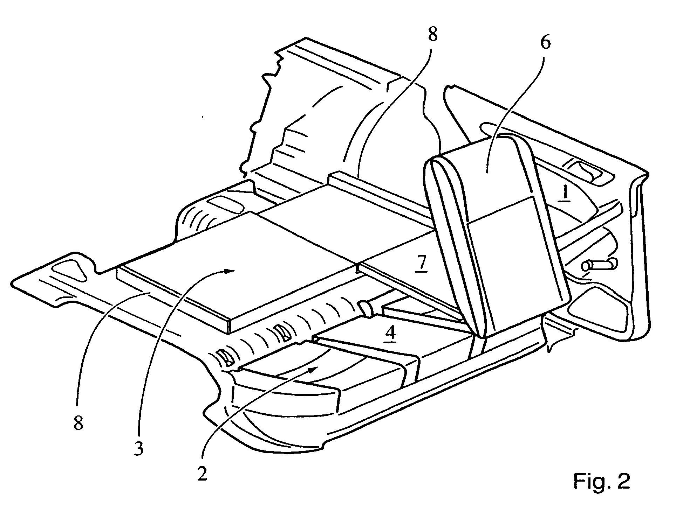

In Figur 1 ist die Rücksitzbank 2 in ihrer Gebrauchsposition dargestellt. Das Rückenlehnensegment 5 und das nicht gezeigte rechte Rückenlehnensegment sind in aufrechter Stellung an der Hinterkante des Sitzteils 4 angeordnet. Erfindungsgemäß ist vorgesehen, dass das linke, Rückenlehnensegment (im Ausführungsbeispiel 40% der Rückenlehne 6) starr an der Vorderkante eines dahinterliegenden, entsprechend schmal ausgeführten Ladebodensegments 7 befestigt ist. Das andere nicht dargestellte Rückenlehnensegment ist ebenfalls starr mit der Vorderkante des Ladebodens 3 verbunden. Das linke Ladebodensegment 7 ist unabhängig von dem Ladeboden 3 verschiebbar. Der Ladeboden 3 kann vorzugsweise gemeinsam mit dem Ladebodensegment verschoben werden. Das Rückenlehnensegment 5 kann daher gemeinsam mit dem Ladebodensegment 7 im Fahrzeuginnenraum relativ zu dem Ladeboden 3 und dem rechten Rückenlehnensegment nach vorne von der Gebrauchs- in eine Ladeposition verschoben werden, in der es beispielsweise an der Rückenlehne des davor befindlichen Fahrzeugsitzes anliegt (Figur. 2). Der rechte Teil der Rücksitzbank 2 kann weiterhin zur Unterbringung von Passagieren genutzt werden, d.h. ist in der Gebrauchsposition.

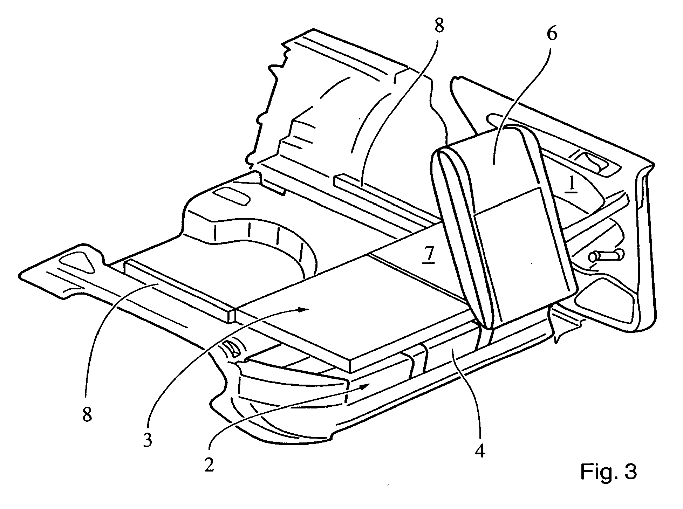

Das Ladebodensegment 3 ist gleichfalls längsverschieblich gelagert, und zwar in sich seitlich und horizontal im Fahrzeuginnenraum erstreckenden Führungsschienen 8. An der Vorderkante des rechten Teils des Ladebodensegmentes 3 ist das nicht gezeigte rechte Rückenlehnensegment starr befestigt. Durch Verschieben des Ladebodens in Fahrtrichtung (Figur 3) werden daher sowohl das rechte Lehnensegment als auch das linke Rückenlehnensegment 5 einschließlich Ladebodensegment 7 nach vorne verlagert, wodurch sich das verfügbare Ladevolumen erheblich vergrößert.

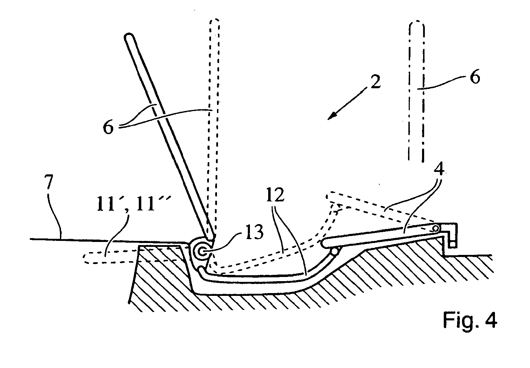

In Figur 4 ist eine schematische Seitenansicht des erfindungsgemäßen Fahrzeugsitzes 2 bzw. einer erfindungsgemäßen Rücksitzbank 2 dargestellt. Der Fahrzeugsitz 2 weist ein Sitzteil 4 und ein Lehnenteil 6 auf. Am Lehnenteil 6 ist ein Ladebodenelement 7 angeordnet.

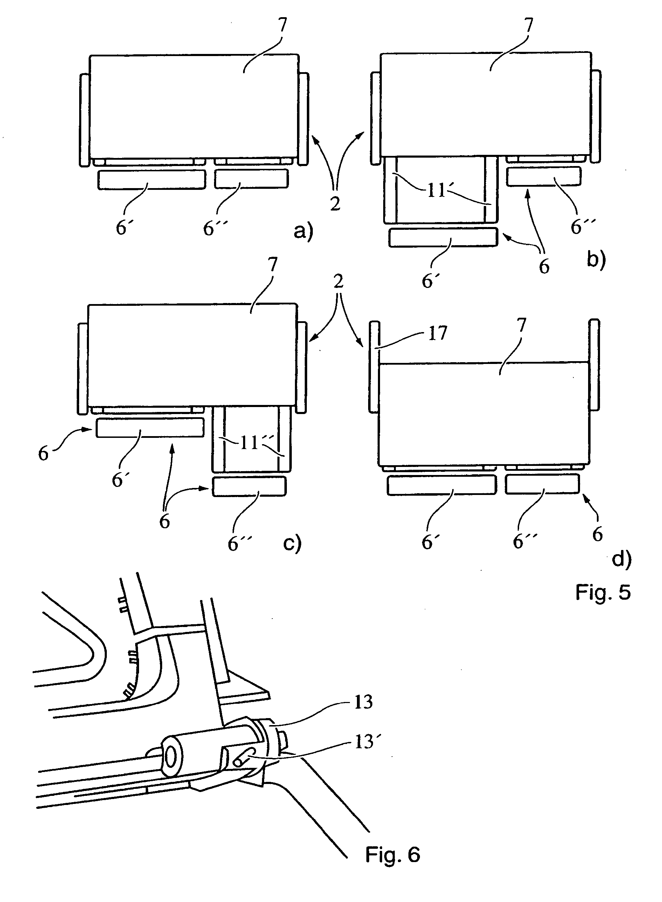

In Figur 5 sind schematisch vier Draufsichten auf einen als Rücksitzbank 2 ausgeführten Fahrzeugsitz 2 dargestellt. Die dargestellte Rücksitzbank 2 weist ein Lehnenteil 6 mit einem ersten Teilsegment 6' der Rückenlehne bzw. des Lehnenteils 6 und mit einem zweiten Teilsegment 6" der Rückenlehne bzw. des Lehnenteils 6 auf. In einer ersten Teilfigur 5a sind beide Teilsegmente 6', 6" des Lehnenteils 6 in ihrer Gebrauchsposition dargestellt. In einer zweiten Teilfigur 5b ist das erste Teilsegment 6' ausgezogen, d.h. in seine Ladeposition eingestellt, dargestellt und es ist das zweite Teilsegment 6" in seiner Gebrauchspositon dargestellt. In einer dritten Teilfigur 5c ist umgekehrt das zweite Teilsegment 6" ausgezogen, d.h. in seine Ladeposition eingestellt, dargestellt und es ist das erste Teilsegment 6' in seiner Gebrauchspositon dargestellt. In einer vierten Teilfigur 5d sind beide Teilsegmente 6', 6" des Lehnenteils 6 in ihrer Ladeposition dargestellt und es ist ebenfalls das Ladebodensegment 7 ausgezogen dargestellt. Zur Bewegung des ersten Teilsegments 6' ist ein erster Linearauszug 11' vorgesehen. Zur Bewegung des zweiten Teilsegments 6" ist ein zweiter Linearauszug 11" vorgesehen. Zur Bewegung des Ladebodensegments 7 ist ein dritter Linearauszug 17 vorgesehen.

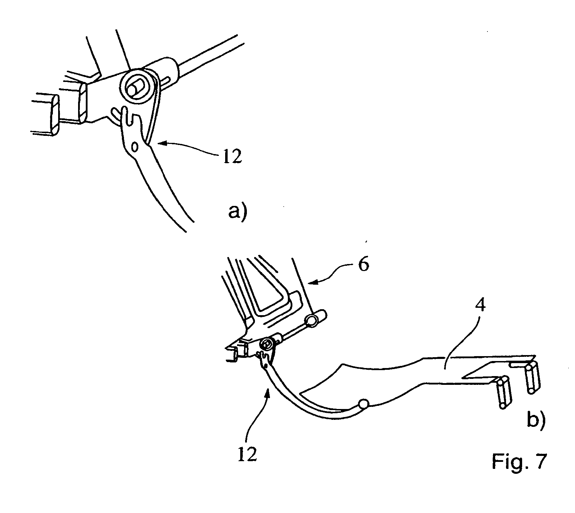

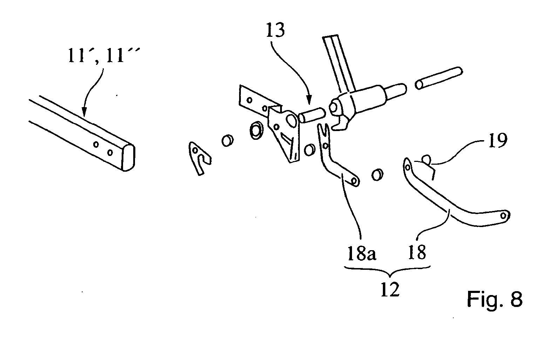

In den Figuren 6, 7 und 8 sind schematisch Details zur Funktionsweise bzw. zur Kinematik des erfindungsgemäßen Fahrzeugsitzes 2 dargestellt, wobei in Figur 7b eine schematische perspektivische Darstellung auf den unteren Teil des Lehnenteils 6, in Figur 7a bzw. in Figur 6 jeweils Detailansichten von außen bzw. von innen auf die Anbindung des unteren Teils des Lehnenteils 6 und in Figur 8 eine Explosionsdarstellung der Anbindung des unteren Teils des Lehnenteils 6 abgebildet sind. Diese Figuren sind nachfolgend zusammen mit der Figur 4 näher erläutert. Das Lehnenteil 6 ist in Figur 4 in seiner Gebrauchsposition (durchgezogene Linien) und in einer Mittelstellung (gestrichelte Linien) dargestellt. In die Mittelstellung kann das Lehnenteil 6 ausgehend von der Gebrauchsposition (auch Designposition genannt) bewegt werden, insbesondere um eine nicht dargestellte Drehachse gedreht werden. Es kann vorzugsweise jedoch auch beispielsweise ein Viergelenkmechanismus zur Bewegung des Lehnenteils 6 in die Mittelstellung vorgesehen sein. Vorzugsweise wird durch die Bewegung in die Mittelstellung zum einen ein Befestigungselement 13, welches den unteren Teil des Lehnenteils 6 sichert und insbesondere in Form eines Befestigungsstifts (auch "striker pin" genannt) vorgesehen ist, gelöst und es wird besonders vorzugt über ein Übertragungselement 12 - insbesondere als Übertragungshebel ausgebildet - ein Anheben des Sitzteils 4 (bzw. ein Anheben des hinteren Teils des Sitzteils 4) und somit eine beginnende Drehung - d.h. eine Vergrößerung des Winkels des Sitzteils gegenüber der Horizontalen - des Sitzteils 4 nach vorne (in Figur 4 rechts) bewirkt. Ein Mittel, beispielsweise ein Steuerungselement 13', insbesondere vorgesehen in Form einer Kulissenführung, beispielsweise eines Zapfens in einer Kulisse, dient dazu, das Befestigungselement 13 in Richtung vorzugsweise parallel zur Drehachse, um die sich das Lehnenteil 6 bei der Einstellung der Mittelstellung ausgehend von der Gebrauchsposition dreht, zu bewegen bzw. zu verschieben und damit außer Eingriff mit einem nicht dargestellten zur Befestigung dienenden Gegenelement zu bringen. In der Ladeposition des Lehnenteils 6 (lediglich der obere Teil des Lehnenteils 6 ist in Figur 4 mit strichpunktierter Linie nach rechts verschoben angedeutet) ist dieses bbeispielsweise mittels des ersten bzw. zweiten Linearauszugs 11', 11" verschoben. Hierbei wird das Sitzteil 4 in Richtung zur Vertikalen geklappt. Das Übertragungselement 12 kann - wie aus der Figur 5 ersichtlich - auch zweiteilig mit einem ersten Teilelement 18 und einem zweiten Teilelement 18a vorgesehen sein. Hierbei wird bei der Bewegung von der Gebrauchsposition in die Mittelstellung (d.h. bei einem Vorklappen des Lehnenteils 6) - insbesondere über einen Hebelmechanismus - eine entgegengesetzte Drehung des zweiten Teilelements 18a des Übertragungselements 12 bewirkt. Diese entgegengesetzte Drehung des zweiten Teilelements 18a kann insbesondere auf das länger ausgebildete erste Teilelement 18 übertragen werden, um das Sitzteil 4 ausgehend von der Gebrauchsposition des Sitzteils anzuheben. Besonders bevorzugt ist es vorgesehen, dass zwischen dem ersten Teilelement 18 und dem zweiten Teilelement 18a ein Ausgleichselement 19, beispielsweise in Form eines Gelenks und einer Feder, vorgesehen ist. Hierdurch ist es vorteilhaft möglich, dass das erste Teilelement 18 des Übertragungselements 12 sowohl bei der Bewegung des Lehnenteils 6 von der Gebrauchsposition in die Mittelstellung rotativ bewegt wird als auch bei der Bewegung des Lehnenteils 6 von der Mittelstellung in die Ladeposition rotativ bewegt wird, während das zweite Teilelement 18a des Übertragungselements 12 lediglich während der Bewegung des Lehnenteils 6 von der Gebrauchsposition in die Mittelstellung rotativ bewegt wird.

### Bezugszeichenliste:

- 1: Fahrzeugtür
- 2: Rücksitzbank / Fahrzeugsitz
- 3: Ladeboden
- 4: Sitzteil
- 5: Rückenlehnensegment (links)
- 6: Rückenlehne / Lehnenteil
- 6': erstes Teilsegment der Rückenlehne bzw. des Lehnenteils
- 6": zweites Teilsegment der Rückenlehne bzw. des Lehnenteils
- 7: Ladebodenelement
- 8: Führung, Führungsschiene
- 11': erster Linearauszug
- 11": zweiter Linearauszug
- 12: Übertragungselement
- 13: Befestigungselement
- 13': Steuerungselement
- 17: dritter Linearauszug
- 18: erstes Teilsegment des Übertragungselements
- 18a: zweites Teilsegment des Übertragungselements
- 19: Ausgleichelement

## Patentansprüche

1. Kraftfahrzeug mit einem verschieblichen Ladeboden (3) und einer Rückenlehne (5), die von einer Gebrauchsposition in eine Verstauposition verschiebbar ist, **dadurch gekennzeichnet, dass** die Rückenlehne (5) zumindest zeitweise an dem Ladeboden (3) gelagert ist, wobei der Ladeboden während der Verschiebung der Rückenlehne von der Gebrauchs- in die Verstauposition alle statischen und dynamischen Kräfte, die auf die Rückenlehne einwirken, aufnimmt.

2. Kraftfahrzeug nach Anspruch 1, **dadurch gekennzeichnet**, das der Ladeboden (3) in einer Führung gelagert ist.

3. Kraftfahrzeug nach einem der voranstehenden Ansprüche, **dadurch gekennzeichnet, dass** der Ladeboden (3) aus mehreren Ladebodensegmenten (7) besteht.

4. Kraftfahrzeug nach einem der voranstehenden Ansprüche, **dadurch gekennzeichnet, dass** die Rückenlehne (5) aus mehreren Rückenlehnensegmenten besteht.

5. Kraftfahrzeug nach Anspruch 4, **dadurch gekennzeichnet, dass** ein Rückenlehnensegment mit dem dahinter liegenden Ladebodensegment verbunden ist.

6. Kraftfahrzeug nach einem der voranstehenden Ansprüche, **dadurch gekennzeichnet, dass** die Rückenlehne (5) oder das Rückenlehnensegment vorzugsweise starr mit der Vorderkante des Ladebodens (3) oder des Ladebodensegments verbunden ist.

7. Kraftfahrzeug nach einem der voranstehenden Ansprüche, **dadurch gekennzeichnet, dass** es einen Fahrzeugsitz (2) aufweist, wobei der Fahrzeugsitz ein Sitzteil (4) und ein Lehnenteil (6) aufweist, wobei das Lehnenteil (6) zusammen mit einem Ladebodenelement (7) vorzugsweise im wesentlichen linear verschiebbar zwischen einer ersten, einer Gebrauchsposition entsprechenden, Position und einer zweiten, einer Ladeposition entsprechenden Position, vorgesehen ist.

8. Kraftfahrzeug nach einem der voranstehenden Ansprüche, **dadurch gekennzeichnet, dass** zwischen der ersten Position und der zweiten Position des Lehnenteils eine Schwenkbewegung des Sitzteils vorgesehen ist.

9. Kraftfahrzeug nach Anspruch 8, **dadurch gekennzeichnet, dass** die Schwenkbewegung des Sitzteils (4) dessen Winkel gegenüber der Horizontalen vergrößert.

10. Kraftfahrzeug nach einem der voranstehenden Ansprüche, **dadurch gekennzeichnet, dass** die Rückenlehne bzw. das Lehnenteil bei einem als Rücksitzbank vorgesehenen Fahrzeugsitz geteilt vorgesehen ist.

11. Kraftfahrzeug nach einem der voranstehenden Ansprüche, **dadurch gekennzeichnet, dass**, bei einer Einstellung der zweiten Position des Lehnenteils, das Lehnenteil zur Vergrößerung des Ladeboden bzw. des Laderaumvolumens nach vorne, bevorzugt hinter die Lehnen einer weiter vorne angeordneten Sitzreihe des Fahrzeugs verschiebbar ist.

12. Kraftfahrzeug nach einem der voranstehenden Ansprüche, **dadurch gekennzeichnet, dass** die Verschiebung mittels Linearauszügen vorgesehen ist.

## Claims

1. Motor vehicle having a displaceable loading floor (3) and a backrest (4) which is displaceable from a use position into a stowed position, **characterized in that** the backrest (5) is at least temporarily mounted on the loading floor (3), wherein the loading floor absorbs all static and dynamic forces that act on the backrest while the backrest is being displaced from the use position into the stowed position.

2. Motor vehicle according to Claim 1, **characterized in that** the loading floor (3) is mounted in a guide.

3. Motor vehicle according to either of the preceding claims, **characterized in that** the loading floor (3) consists of a number of loading floor segments (7).

4. Motor vehicle according to one of the preceding claims, **characterized in that** the backrest (5) consists of a number of backrest segments.

5. Motor vehicle according to Claim 4, **characterized in that** a backrest segment is connected to the loading floor segment located therebehind.

6. Motor vehicle according to one of the preceding claims, **characterized in that** the backrest (5) or the backrest segment is connected preferably rigidly to the front edge of the loading floor (3) or of the loading floor segment.

7. Motor vehicle according to one of the preceding claims, **characterized in that** it has a vehicle seat (2), wherein the vehicle seat has a seat part (4) and a backrest part (6), wherein the backrest part (6) is provided so as to be displaceable, preferably in a substantially linear manner, together with a loading floor element (7), between a first position, corresponding to a use position, and a second position, corresponding to a loading position.

8. Motor vehicle according to one of the preceding claims, **characterized in that** a pivoting movement of the seat part is provided between the first position and the second position of the backrest part.

9. Motor vehicle according to Claim 8, **characterized in that** the pivoting movement of the seat part (4) increases the angle thereof with respect to the horizontal.

10. Motor vehicle according to one of the preceding claims, **characterized in that** the backrest or the backrest part is provided in a divided manner in the case of a vehicle seat provided in the form of a rear bench.

11. Motor vehicle according to one of the preceding claims, **characterized in that**, during setting of the second position of the backrest part, the backrest part is displaceable forward, preferably to behind the backrest of a further forward row of seats of the vehicle, in order to increase the size of the loading floor or of the loading compartment volume.

12. Motor vehicle according to one of the preceding claims, **characterized in that** the displacement is provided by means of linear pull-out mechanisms.

## Revendications

1. Véhicule automobile équipé d'un plancher de chargement (3) coulissant et d'un dossier (5) pouvant être coulissé d'une position d'utilisation dans une position de rangement, **caractérisé en ce que** le dossier (5) est disposé au moins temporairement contre le plancher de chargement (3), le plancher de chargement absorbant toutes les forces statiques et dynamiques s'exerçant sur le dossier pendant le coulissement du dossier de la position d'utilisation dans la position de rangement.

2. Véhicule automobile selon la revendication 1, **caractérisé en ce que** le plancher de chargement (3) est disposé dans un guide.

3. Véhicule automobile selon l'une quelconque des revendications précédentes, **caractérisé en ce que** le plancher de chargement (3) se compose de plusieurs segments de plancher de chargement (7).

4. Véhicule automobile selon l'une quelconque des revendications précédentes, **caractérisé en ce que** le dossier (5) se compose de plusieurs segments de dossier.

5. Véhicule automobile selon la revendication 4, **caractérisé en ce qu'**un segment de dossier est relié au segment de plancher de chargement placé derrière lui.

6. Véhicule automobile selon l'une quelconque des revendications précédentes, **caractérisé en ce que** le dossier (5) ou le segment de dossier est de préférence relié de façon rigide au bord avant du plancher de chargement (3) ou du segment de plancher de chargement.

7. Véhicule automobile selon l'une quelconque des revendications précédentes, **caractérisé en ce qu'**il comporte un siège de véhicule (2), le siège de véhicule comportant une partie de siège (4) et une partie d'accoudoir (6), la partie d'accoudoir (6) étant prévue conjointement avec un élément de plancher de chargement (7) de façon à pouvoir être coulissé de préférence pour l'essentiel de façon linéaire entre une première position correspondant à une position d'utilisation et une deuxième position correspondant à une position de chargement.

8. Véhicule automobile selon l'une quelconque des revendications précédentes, **caractérisé en ce qu'**un mouvement de pivotement de la partie de siège est prévu entre la première position et la deuxième position de la partie d'accoudoir.

9. Véhicule automobile selon la revendication 8, **caractérisé en ce que** le mouvement de pivotement de la partie de siège (4) agrandit son angle par rapport à l'horizontale.

10. Véhicule automobile selon l'une quelconque des revendications précédentes, **caractérisé en ce que** le dossier et/ou la partie d'accoudoir est prévu de façon séparée pour un siège de véhicule prenant la forme d'une banquette de siège arrière.

11. Véhicule automobile selon l'une quelconque des revendications précédentes, **caractérisé en ce qu'**en cas de réglage de la deuxième position de la partie d'accoudoir, la partie d'accoudoir peut être coulissée pour agrandir le plancher de chargement et/ou le volume de l'espace de chargement vers l'avant, de façon préférée derrière les accoudoirs d'une rangée de sièges du véhicule située plus en avant.

12. Véhicule automobile selon l'une quelconque des revendications précédentes, **caractérisé en ce que** le coulissement est prévu à l'aide de mouvements linéaires.
